Europäisches Patentamt

European Patent Office

Office européen des brevets

(19)

(11) Veröffentlichungsnummer: **0 025 194**
**A2**

(12) **EUROPÄISCHE PATENTANMELDUNG**

(21) Anmeldenummer: **80105132.7**

(22) Anmeldetag: **28.08.80**

(51) Int. Cl.³: **G 06 F 1/00**

(30) Priorität: **11.09.79 DE 2936683**

(43) Veröffentlichungstag der Anmeldung:
**18.03.81 Patentblatt 81/11**

(84) Benannte Vertragsstaaten:
**AT BE CH DE FR GB IT LI NL SE**

(71) Anmelder: SIEMENS AKTIENGESELLSCHAFT Berlin
und München
Postfach 22 02 61
D-8000 München 22(DE)

(72) Erfinder: **Krings, Gert, Dipl.-Ing.**
Linienstrasse 75
D-8024 Deisenhofen(DE)

(72) Erfinder: **Meyer, Josef**
Gartenpromenade 23
D-8035 Gauting(DE)

(54) Rücksetzschaltung für Mikroprozessoren.

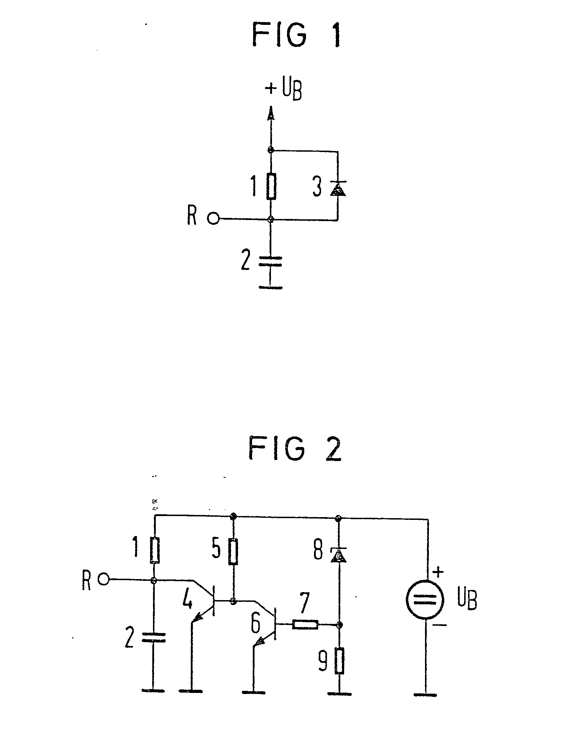

(57) Die Erfindung bezieht sich auf eine Rücksetzschaltung für Mikroprozessoren zur Bildung von Rücksetzsignalen in Abhängigkeit von der dem Mikroprozessor zugeführten Betriebsspannung, mit einem an einem Rücksetzeingang des Mikroprozessors liegenden Kondensator. Eine derartige Rücksetzschaltung soll auch bei kurzzeitigen Einbrüchen oder zeitweiligem Absinken der Versorgungsspannung unter einen vorgegebenen Grenzwert den Mikroprozessor mit Sicherheit zurücksetzen. Die Erfindung sieht hierzu einen durch die Betriebsspannung steuerbaren Transistor vor, dessen Emitter-Kollektor-Strecke parallel zum Kondensator angeordnet ist. Die Rücksetzschaltung läßt sich insbesondere bei Mikroprozessoren anwenden, bei denen eine interne Startschaltung beim Einschalten der Vorsorgungsspannung ein Rücksetzen unter anderem des Programmzählers bewirkt (Fig. 2).

FIG 2

0025194

SIEMENS AKTIENGESELLSCHAFT        Unser Zeichen:
Berlin und München               VPA
                                     79 P 6 6 5 9 EUR

Rücksetzschaltung für Mikroprozessoren

Die Erfindung bezieht sich auf eine Rücksetzschaltung
für Mikroprozessoren zur Bildung von Rücksetzsignalen
in Abhängigkeit von der dem Mikroprozessor zugeführten
Betriebsspannung, mit einer an die Betriebsspannungsquelle angeschlossenen, aus einem Widerstand und einem
Kondensator bestehenden Serienschaltung, deren Kondensator mit seinem einen Anschluß an Bezugspotential liegt
und dessen anderer Anschluß an den Rücksetzeingang des
Mikroprozessors geführt ist.

Eine derartige Rücksetzschaltung ist beispielsweise bereits aus der Druckschrift SAB 8085, Microcomputer
Systems Users Manual, Seite 2-22 und Seite 2-10, Siemens
AG bekannt.

Wd 1 Sse - 7.9.79

Fig. 1 zeigt die bekannte Rücksetzschaltung, die an den Reset-Eingang des Mikroprozessors angeschlossen ist. Wird die Versorgungsspannung eingeschaltet, so hält der Kondensator 2 das Potential am Reset-Eingang R für eine bestimmte Zeit unter der Einschaltschwelle des internen Schmitt-Triggers. Diese Schwelle wird erst überschritten, wenn die Betriebsspannung längst ihren Endwert erreicht hat. Eine zusätzliche Diode 3 sorgt für das schnelle Entladen des Kondensators 2 bei Ausfall der Spannung.

Auf diese Weise wird eine für viele Anwendungsfälle ausreichende Sicherheit gegen Fehlsteuerungen erreicht.

Wie Untersuchungen im Rahmen der Erfindung zeigten, können sich diese Maßnahmen jedoch bei bestimmten Betriebsbedingungen und besonders hohen Anforderungen an eine fehlerfreie Steuerung des Ablaufes unter Umständen als nicht ausreichend erweisen.

Aufgabe der Erfindung ist es daher, eine Rücksetzschaltung zu schaffen, die auch bei kurzzeitigen Einbrüchen oder zeitweiligem Absinken der Vorsorgungsspannung unter einen vorgegebenen Grenzwert den Mikroprozessor mit Sicherheit zurücksetzt.

Gemäß der Erfindung wird die Rücksetzschaltung zur Lösung dieser Aufgabe derart ausgebildet, daß parallel zum Kondensator die Emitter-Kollektor-Strecke eines ersten Transistors angeordnet ist, und daß der erste Transistor durch die Betriebsspannung derart steuerbar ist, daß er bei Werten der Betriebsspannung, die einen vorgegebenen Wert unterschreiten, leitend ist.

Durch diese Maßnahmen ergeben sich in vorteilhafter Weise besonders vielseitige Einsatzmöglichkeiten für den Mikroprozessor.

In weiterer Ausgestaltung der Erfindung wird die Rücksetzschaltung derart ausgebildet, daß der erste Transistor über einen in Emitterschaltung angeordneten zweiten Transistor gesteuert ist, bei dem die Basis über die Z-Diode an den gegenüber Bezugspotential spannungsführenden Anschluß der Betriebsspannungsquelle, der Emitter an Bezugspotential und der Kollektor sowohl an die Basis des ersten Transistors als auch über einen ersten Widerstand an den spannungsführenden Anschluß der Betriebsspannungsquelle geführt ist.

Dabei ergibt sich in vorteilhafter Weise eine besonders exakt arbeitende Steuerung des ersten Transistors mit einfach realisierbaren Mitteln.

Bei einer bevorzugten Ausführungsform der Erfindung ist in der Basiszuleitung des zweiten Transistors ein zweiter Widerstand angeordnet, wobei der Verbindungspunkt zwischen der Z-Diode und dem weiteren Widerstand über einen dritten Widerstand an Bezugspotential geführt ist.

Die Erfindung wird anhand des in Fig. 2 gezeigten Ausführungsbeispieles näher erläutert.

Es zeigen

Fig. 1 wie eingangs näher dargelegt, eine bekannte Rücksetzschaltung für Mikroprozessoren und

Fig. 2 eine Rücksetzschaltung nach der Erfindung.

Beim Einschalten der Versorgungsspannung $U_B$ eines Mikroprozessors bzw. beim Wiederansteigen derselben nach einem Einbruch müssen der Programmzähler und die interne Ablaufsteuerung des Mikroprozessors in eine definierte Ausgangslage gebracht werden. Dies erreicht man dadurch, daß man die Spannung am Reset-Eingang R des Mikroprozessors solange unter einem bestimmten Schwellwert hält, wie die Betriebsspannung $U_B$ noch nicht den unteren Toleranzwert überschritten hat.

Bei der bekannten Rücksetzschaltung nach Fig. 1 werden diese Forderungen mit einem Kondensator 2, einem Widerstand 1 und einer dem Widerstand 1 parallel geschalteten Diode 3 zum schnellen Entladen des Kondensators 2 für vom Wert 0 aus ansteigende Spannungen erfüllt, wobei die Zeitkonstante des genannten RC-Gliedes 1,2 groß gegen die Anstiegszeit der Versorgungsspannung $U_B$ sein muß. Sinkt aber die Versorgungsspannung bei Unterbrechungen bzw. Überlast nicht auf den Wert Null ab, sondern steigt von einem beliebigen Wert wieder an, ist die Schaltung nicht ohne weiteres in der Lage, den Mikroprozessor neu zu starten. Das System muß dann z.B. von Hand durch kurzzeitiges Verbinden des Reset-Einganges mit Masse rückgesetzt werden, damit der Mikroprozessor wieder in der gewünschten Weise arbeitet.

Bei der in Fig. 2 gezeigten Rücksetzschaltung ist der Rücksetzeingang R des in der Figur nicht dargestellten Mikroprozessors an den gegenüber Massespannung bzw. Bezugspotential führenden Anschluß des Kondensators 2 angeschlossen. Parallel zum Kondensator 2 liegt die Kollektor-Emitter-Strecke des Transistors 4. Der Spannung führende Anschluß des Kondensators 2 ist ferner über den Widerstand 1 an den Pluspol der minusseitig geerdeten Betriebsspannungsquelle $U_B$ geführt.

Parallel zur Betriebsspannungsquelle $U_B$ liegt die aus der Z-Diode 8 und dem Widerstand 9 bestehende Serienschaltung, bei der die Z-Diode 8 an den Pluspol der Betriebsspannungsquelle $U_B$ angeschlossen ist. Der Verbindungspunkt von Z-Diode 8 und Widerstand 9 ist über den Widerstand 7 an die Basis des Transistors 6 geführt. Bei dem Transistor 6 ist der Emitter unmittelbar geerdet, der Kollektor unmittelbar an die Basis des Transistors 4 geführt und über den Widerstand 5 an den Pluspol der Betriebsspannungsquelle $U_B$ angeschlossen.

Die in Fig. 2 dargestellte Schaltung sorgt dafür, daß der Reset-Eingang R des Mikroprozessors immer dann auf Bezugspotential gelegt wird, wenn die Betriebsspannung $U_B$ einen vorgegebenen Grenzwert unterschreitet, wobei für diesen Grenzwert ein Toleranzbereich gewählt wird, dessen untere Grenze gleich dem untersten Spannungswert ist, bei dem der Mikroprozessor gerade noch zuverlässig arbeitet. Insbesondere hat sich für den Fall, daß dieser unterste Spannungswert 4 V beträgt, ein Toleranzbereich von 4 V bis 4,5 V als besonders zweckmäßig erwiesen.

Die Z-Diode 8 überträgt den vollen Spannungshub auf die Basis des Transistors 6. Die Temperaturabhängigkeit der Basis-Emitterdiode des Transistors 6 geht zwar voll ein, liegt aber zusammen mit der Streuung der Zenerspannung der Z-Diode 8 gut im Toleranzbereich, der zum einwandfreien Rücksetzen des Mikroprozessors z.B. zwischen 4 V und 4,5 V erforderlich ist.

Der Transistor 4 dient zur Invertierung. Der Kondensator 2 sorgt dafür, daß bei sehr schnellem Anstieg der Betriebsspannung $U_B$ das Rücksetzsignal so lange verzögert wird, bis im Mikroprozessor alle Anfangsbedingungen erfüllt sind.

Die Rücksetzschaltung läßt sich insbesondere bei Mikroprozessoren anwenden, die eine interne Startschaltung
besitzen, die beim Einschalten der Vorsorgungsspannung
ein Rücksetzen unter anderem des Programmzählers bewirkt. Die Rücksetzschaltung ermöglicht dabei ein definiertes Starten unter allen Umständen.

Die Rücksetzschaltung legt den Reset-Eingang grundsätzlich auf Nullpotential, sobald die Betriebsspannung
einen Wert unterschreitet, bei dem der Mikroprozessor
noch einwandfrei arbeitet. Wird dieser Wert beim Ansteigen der Spannung wieder überschritten, gibt die Schaltung
den Reset-Eingang frei, womit der Prozessor neu gestartet wird.

3 Patentansprüche
2 Figuren

Patentansprüche

1. Rücksetzschaltung für Mikroprozessoren zur Bildung von Rücksetzsignalen in Abhängigkeit von der dem Mikroprozessor zugeführten Betriebsspannung, mit einer an die Betriebsspannungsquelle angeschlossenen, aus einem Widerstand und einem Kondensator bestehenden Serienschaltung, deren Kondensator mit seinem einen Anschluß an Bezugspotential liegt und dessen anderer Anschluß an den Rücksetzeingang des Mikroprozessors geführt ist, d a d u r c h   g e k e n n z e i c h n e t , daß parallel zum Kondensator (2) die Emitter-Kollektor-Strecke eines ersten Transistors (4) angeordnet ist und daß der erste Transistor (4) durch die Betriebsspannung ($U_B$) derart steuerbar ist, daß er bei Werten der Betriebsspannung ($U_B$), die einen vorgegebenen Wert unterschreiten, leitend ist.

2. Rücksetzschaltung nach Anspruch 1, d a d u r c h   g e k e n n z e i c h n e t , daß der erste Transistor (4) über einen in Emitterschaltung angeordneten zweiten Transistor (6) gesteuert ist, bei dem die Basis über eine Z-Diode (8) an den gegenüber Bezugspotential spannungsführenden Anschluß der Betriebsspannungsquelle (10) , der Emitter an Bezugspotential und der Kollektor sowohl an die Basis des ersten Transistors (4) als auch über einen ersten Widerstand (5) an den spannungsführenden Anschluß der Betriebsspannungsquelle (10) geführt ist.

3. Rücksetzschaltung nach Anspruch 2, d a d u r c h   g e k e n n z e i c h n e t , daß in der Basiszuleitung des zweiten Transistors (6) ein zweiter Widerstand (7) angeordnet ist, und daß der Verbindungspunkt zwischen
der Z-Diode (8) und dem weiteren Widerstand (7) über
einen dritten Widerstand (9) an Bezugspotential geführt
ist.

1/1

## FIG 1

+ U_B

R ○

1

2

3

## FIG 2

1

5

8

R ○

4

6

7

2

9

U_B